(19) **Europäisches Patentamt**
**European Patent Office**
**Office européen des brevets**

(11) **EP 4 319 334 A1**

(12) **EUROPEAN PATENT APPLICATION**
published in accordance with Art. 153(4) EPC

(43) Date of publication:
**07.02.2024 Bulletin 2024/06**

(21) Application number: **22780125.5**

(22) Date of filing: **16.03.2022**

(51) International Patent Classification (IPC):
***H04W 56/00*** (2009.01)  ***H04W 68/12*** (2009.01)

(52) Cooperative Patent Classification (CPC):
**H04W 56/00; H04W 68/12**

(86) International application number:
**PCT/JP2022/011978**

(87) International publication number:
**WO 2022/209905 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 JP 2021058624**

(71) Applicants:
• **DENSO CORPORATION
Kariya-city, Aichi 448-8661 (JP)**

• **TOYOTA JIDOSHA KABUSHIKI KAISHA
Toyota-shi
Aichi 471-8571 (JP)**

(72) Inventors:
• **NAGANO, Tatsuki
Kariya-city, Aichi 448-8661 (JP)**
• **YAMAMOTO, Tomoyuki
Kariya-city, Aichi 448-8661 (JP)**

(74) Representative: **TBK
Bavariaring 4-6
80336 München (DE)**

(54) **USER DEVICE, BASE STATION, AND COMMUNICATION CONTROL METHOD**

(57) A user equipment (100) is configured to communicate with a plurality of networks (200A, 200B) using a plurality of subscriber identity modules (111, 112). The user equipment communicates with a base station (210A) of a first network (200A) included in the plurality of networks (200A, 200B). The user equipment determines whether or not a second network (200B) included in the plurality of networks (200A, 200B) is synchronized with the first network (200A). The user equipment transmits, to the base station (210A), a radio resource control (RRC) message including an information element indicating whether or not the second network (200B) is synchronized with the first network (200A).

FIG. 1

**Description**

Cross-Reference to Related Applications

The present application is based on and claims the benefit of priority of Japanese Patent Application No. 2021-058624, filed on March 30, 2021, the entire contents of which are incorporated herein by reference.

Technical Field

The present disclosure relates to a user equipment, a base station, and a communication control method that are used in a mobile communication system.

Background Art

In Release 17 of the 3rd generation partnership project (3GPP), which is a mobile communication system standardization project, a work item has been launched for a user equipment equipped with a plurality of subscriber identity modules to formulate a function of performing data communication while existing in a network of a plurality of communication operators.

Currently, a mechanism in which a user equipment existing in a plurality of networks receives paging (that is, incoming call) is not specified in standard specifications, and depends on implementation of the user equipment. However, in a case where an incoming call is received from one network (hereinafter, "first network") during communication with another network (hereinafter, "second network"), the user equipment overlooks the incoming call. Thus, methods of receiving incoming calls from a plurality of networks in cooperation with each network have been studied in the field of 3GPP standardization (see, for example, Non Patent Literatures 1 to 4).

Non Patent Literatures 1 to 4 describe a method in which, in a case where there is only one receiver (RX) included in a user equipment equipped with a plurality of subscriber identity modules, a first network configures an interruption timing at which communication with the first network can be temporarily interrupted to the user equipment in order for the user equipment to monitor paging of a second network while maintaining connection with the first network. Such interruption timing may be referred to as a "gap".

Citation List

Non Patent Literature

Non Patent Literature 1: 3GPP contributions: R2-2009265, "Scenarios and Impact analysis for Switching Notification"
Non Patent Literature 2: 3GPP contributions: R2-2009557,"Switching between two links for Multi-SIM"
Non Patent Literature 3: 3GPP contributions: R2-2010350,"Discussion on switching mechanism for multi-SIM"
Non Patent Literature 4: 3GPP contributions: R2-2100475,"Discussion on Switching Notification Procedure"

Summary of Invention

In a case where the first network and the second network are asynchronous, that is, when system frame numbers (SFN: System Frame Number) and/or frame timings used by the first network and the second network are not aligned (not aligned), the interruption timing cannot be appropriately configured from the first network to the user equipment. From this, the inventors have found a problem in that it is difficult for the user equipment to monitor paging in the second network while maintaining a connection state (RRC connected state) in a radio resource control (RRC) layer with the first network.

Therefore, an object of the present disclosure is to provide a user equipment, a base station, and a communication control method that facilitate monitoring paging of a second network while maintaining a connection state with a first network in an RRC layer.

In a first aspect, a user equipment is configured to communicate with a plurality of networks using a plurality of subscriber identity modules. The user equipment comprises: a communicator configured to communicate with a base station of a first network included in the plurality of networks; and a controller configured to determine whether or not a second network included in the plurality of networks is synchronized with the first network. The communicator transmits, to the base station, a radio resource control (RRC) message including an information element indicating whether or not the second network is synchronized with the first network.

In a second aspect, a base station of a first network is included in a plurality of networks in a mobile communication system in which a user equipment communicates with the plurality of networks using a plurality of subscriber identity modules. The base station comprises: a communicator configured to receive, from the user equipment, a radio resource control (RRC) message including an information element indicating whether or not a second network included in the plurality of networks is synchronized with the first network; and a controller configured to acquire the information element included in the RRC message.

In a third aspect, a communication control method is performed by a user equipment configured to communicate with a plurality of networks using a plurality of subscriber identity modules. The communication control method comprises the steps of: communicating with a base station of a first network included in the plurality of networks; determining whether or not a second network included in the plurality of networks is synchronized with the first network; and transmitting, to the base station, a radio resource control (RRC) message including an information element indicating whether or not the second network is synchronized with the first network.

Brief Description of Drawings

The foregoing and other objects, features, and advantages of the present disclosure will become more apparent from the following detailed description with reference to the accompanying drawings. The drawings are as follows.

Fig. 1 is a diagram illustrating a configuration of a mobile communication system according to first and second embodiments.
Fig. 2 is a diagram illustrating a configuration example of a protocol stack of the mobile communication system according to the first and second embodiments.
Fig. 3 is a diagram illustrating a configuration example of UE according to the first and second embodiments.
Fig. 4 is a diagram illustrating a configuration example of a base station of a first network according to the first and second embodiments.
Fig. 5 is a diagram illustrating an operation example of the UE in which an interruption timing is configured from the base station of the first network according to the first and second embodiments.
Fig. 6 is a diagram illustrating an operation example of the mobile communication system according to the first embodiment.
Fig. 7 is a diagram illustrating an operation example of the mobile communication system according to the second embodiment.
Fig. 8 is a diagram illustrating a modification of the second embodiment.

Description of Embodiments

With reference to the drawings, a mobile communication system according to an embodiment is described. In the description of the drawings, identical or similar parts are marked with identical or similar reference numerals.

[First Embodiment]

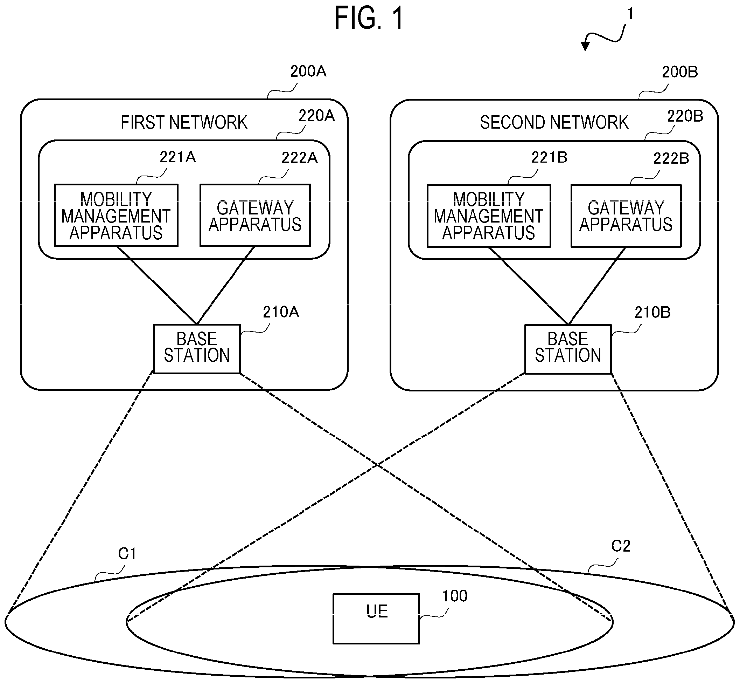

A first embodiment will be described with reference to Figs. 1 to 6.

(System Configuration)

A configuration of a mobile communication system 1 according to the first embodiment will be described with reference to Fig. 1. Hereinafter, an example in which the mobile communication system 1 is a 5th generation system (5G/NR: New Radio) of the 3GPP standard will be mainly described. However, a fourth generation system (4G/LTE: Long Term Evolution) system and/or a sixth generation system may be at least partially applied to the mobile communication system 1.

As illustrated in Fig. 1, a mobile communication system 1 according to the first embodiment includes a user equipment (UE) 100, a first network 200A, and a second network 200B.

The UE 100 is a mobile radio communication apparatus. The UE 100 is only required to be any apparatus used by the user. For example, the UE 100 is a mobile phone terminal (including a smartphone), a tablet terminal, a laptop PC, a communication module (including a communication card or a chipset), a sensor or an apparatus provided in the sensor, a vehicle or an apparatus provided in the vehicle (Vehicle UE), and/or a flight vehicle or an apparatus provided in the flight vehicle (Aerial UE).

The UE 100 is a multi-SIM device compatible with a plurality of subscriber identity modules (SIM). In the following, an example in which the UE 100 compatible with two SIMs will be mainly described, but the UE 100 may be compatible with three or more SIMs. "Compatible with a plurality of SIMs" means that the UE 100 has a capability to handle a plurality of SIMs, and the plurality of SIMs may not necessarily be mounted in the UE 100. Such a UE 100 may be referred to as a "UE supporting a plurality of SIMs". Note that the SIM is not limited to a card type SIM (what is called a SIM card), and may be an embedded SIM (what is called an eSIM) incorporated in the UE 100 in advance. The SIM may be referred to as a universal subscriber identity module (USIM).

The first network 200A is a network associated with one SIM of the UE 100. The second network 200B is a network associated with the other SIM of the UE 100. It is assumed that the UE 100 has performed location registration in the first network 200A using one SIM and has performed location registration in the second network 200B using the other SIM. That is, the UE 100 exists in each of the first network 200A and the second network 200B. The first network 200A and the second network 200B may be networks of different communication operators. However, the first network 200A and the second network 200B may be networks of the same communication operator. Different public land mobile network (PLMN) IDs may be allocated to the first network 200A and the second network 200B.

The first network 200A includes a base station 210A constituting a radio access network, and a core network 220A. The core network 220A includes a mobility management apparatus 221A and a gateway apparatus 222A. Similarly, the second network 200B includes a base station 210B constituting a radio access network and a core network 220B. The core network 220B includes a mobility management apparatus 221B and a gateway apparatus 222B. Hereinafter, the base stations 210A and 200B will be simply referred to as a base station 210 when not distinguished, the mobility management apparatuses 221A and 221B will be simply referred to as a mobility management apparatus 221 when not distinguished, and the gateway apparatuses 222A and 222B will be simply referred to as a gateway apparatus 222 when not distinguished.

The base station 210 is a radio communication apparatus that performs radio communication with the UE 100. The base station 210 manages one or more cells. The base station 210 performs radio communication with the UE 100 that has established a connection in a radio resource control (RRC) layer with its own cell. The base station 210 has a radio resource management (RRM) function, a user data (hereinafter, simply referred to as "data") routing function, a measurement control function for mobility control and scheduling, and/or the like. The "cell" is used as a term indicating a minimum unit of a radio communication area. The "cell" is also used as a term indicating a function or a resource that performs radio communication with the UE 100. One cell belongs to one carrier frequency. Fig. 1 illustrates an example in which the base station 210A manages the cell C1 and the base station 210B manages the cell C2. The UE 100 is located in an overlapping region of the cell C1 and the cell C2.

A frame used in radio communication between the UE100 and the base station 210 is, for example, 10 ms, and a system frame number (SFN: System Frame Number) is allocated to each frame. Each frame is divided into, for example, subframes of 1 ms, and each subframe includes a plurality of OFDM (Orthogonal Frequency Division Multiplexing) symbols.

The base station 210 may be a gNB that is a 5G/NR base station or an eNB that is a 4G/LTE base station. Hereinafter, an example in which the base station 210 is a gNB will be mainly described. The base station 210 may be divided into a central unit (CU) and a distributed unit (DU). The base station 210 may be a relay node such as an integrated access and backhaul (IAB) node.

The mobility management apparatus 221 is an apparatus corresponding to a control plane, and is an apparatus that performs various mobility management for the UE 100. The mobility management apparatus 221 communicates with the UE 100 using non-access stratum (NAS) signaling and manages information of a tracking area in which the UE 100 exists. The mobility management apparatus 221 performs paging through the base station 210 in order to notify an incoming call to the UE 100. The mobility management apparatus 221 may be an access and mobility management function (AMF) of 5G/NR or a mobility management entity (MME) of 4G/LTE.

The gateway apparatus 222 is an apparatus compatible with the user plane and performs transfer control of data of the UE 100. The gateway apparatus 222 may be a 5G/NR user plane function (UPF) or a 4G/LTE serving gateway (S-GW).

In the mobile communication system 1 configured as described above, a scenario is assumed in which the UE 100 including only one receiver (RX) performs data communication while existing in the first network 200A and the second network 200B. When paging is performed from the second network 200B while communicating with the first network 200A, the UE 100 cannot receive the paging and overlooks the incoming call.

In order for the UE100 to monitor paging in the second network 200B while maintaining the RRC connection with the first network 200A, the first network 200A configures, in the UE100, interruption timing at which the UE100 can temporarily interrupt the communication with the first network 200A. However, in a case where the first network 200A and the second network 200B are not synchronized, that is, when the SFNs and/or the frame timings used by the first network and the second network are not aligned (not aligned), it is difficult to appropriately configure the interruption timing from the first network 200A to the UE100. In particular, in a case where the first network 200A and the second network 200B are operated by different communication operators, the first network 200A and the second network 200B can be asynchronous.

(Configuration Example of Protocol Stack)

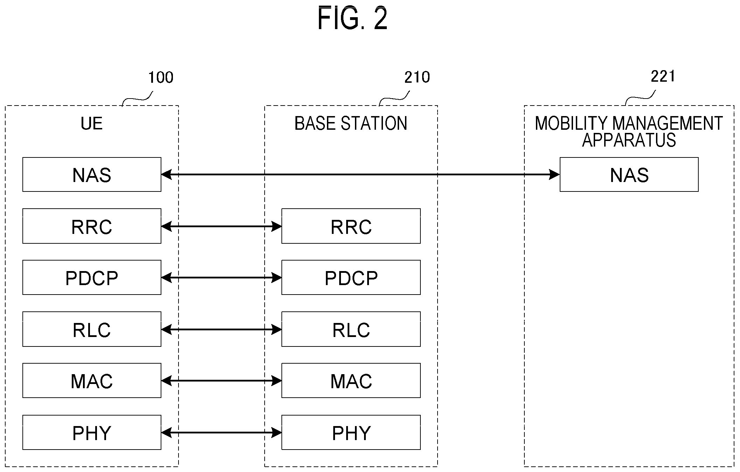

A configuration example of a protocol stack of the mobile communication system 1 will be described with reference to Fig. 2.

As illustrated in Fig. 2, a protocol of a radio section between the UE 100 and the base station 210 includes a physical (PHY) layer, a medium access control (MAC) layer, a radio link control (RLC) layer, a packet data convergence protocol (PDCP) layer, and RRC layer.

The PHY layer performs encoding/decoding, modulation/demodulation, antenna mapping/demapping, and resource mapping/demapping. Data and control information are transmitted between the PHY layer of the UE 100 and the PHY layer of the base station 210 via a physical channel.

The MAC layer performs priority control of data, a retransmission process by hybrid automatic repeat request (HARQ), a random access procedure, and the like. Data and control information are transmitted between the MAC layer of the UE 100 and the MAC layer of the base station 210 via a transport channel. The MAC layer of the base station 210 includes a scheduler. The scheduler determines uplink and downlink transport formats (transport block size, modulation and coding scheme (MCS)) and allocated resources to the UE 100.

The RLC layer transmits data to the RLC layer on the reception side using the functions of the MAC layer and the PHY layer. Data and control information are transmitted between the RLC layer of the UE 100 and the RLC layer of the base station 210 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control and a radio bearer that is a unit in which an access stratum (AS) performs QoS control.

The RRC layer controls a logical channel, a transport channel, and a physical channel according to establishment, re-establishment, and release of a radio bearer. RRC signaling for various configurations is transmitted between the RRC layer of the UE 100 and the RRC layer of the base station 210. When there is an RRC connection between the RRC of the UE 100 and the RRC of the base station 210, the UE 100 is in an RRC connected state. When there is no RRC connection between the RRC of the UE 100 and the RRC of the base station 210, the UE 100 is in an RRC idle state. When the RRC connection between the RRC of the UE 100 and the RRC of the base station 210 is suspended, the UE 100 is in an RRC inactive state.

ANAS layer located above the RRC layer performs session management and mobility management of the UE 100. NAS signaling is transmitted between the NAS layer of the UE 100 and the NAS layer of the mobility management apparatus 221.

Note that the UE 100 has an application layer and the like in addition to the protocol of the radio interface.

(Configuration Example of UE)

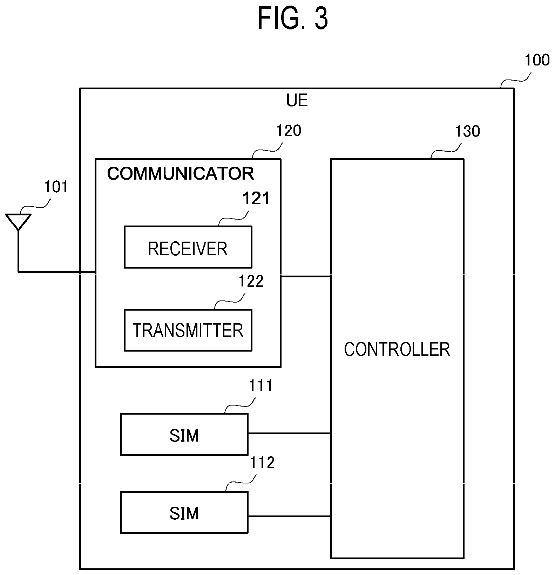

A configuration example of the UE 100 will be described with reference to Fig. 3.

As illustrated in Fig. 3, the UE 100 includes an antenna 101, a SIM 111, a SIM 112, a communicator 120, and a controller 130. The antenna 101 may be provided outside the UE 100. The SIM 111 and the SIM 112 are SIM cards or eSIM.

The SIM 111 stores subscriber information and configuration information necessary for the UE 100 to communicate with the first network 200A. The SIM 111 stores identification information of the UE 100 in the first network 200A, for example, a telephone number, an international mobile subscriber identity (IMSI), and the like.

The SIM 112 stores subscriber information and configuration information necessary for the UE 100 to communicate with the second network 200B. The SIM 112 stores the identification information of the UE 100 in the second network 200B, for example, a telephone number, IMSI, and the like.

The communicator 120 performs radio communication with the first network 200A and radio communication with the second network 200B via the antenna 101 under the control of the controller 130. The communicator 120 may include only one receiver (RX) 121. In this case, the communicator 120 cannot simultaneously perform reception from the first network 200A and reception from the second network 200B. The communicator 120 may include only one transmitter (TX) 122. However, the communicator 120 may include a plurality of transmitters 122. The receiver 121 converts a radio signal received by the antenna 101 into a received signal that is a baseband signal, performs signal processing on the received signal, and outputs the received signal to the controller 130. The transmitter 122 performs signal processing on a transmission signal that is a baseband signal output from the controller 130, converts the signal into a radio signal, and transmits the radio signal from the antenna 101.

The controller 130 controls the communicator 120 and performs various controls in the UE 100. The controller 130 controls communication with the first network 200A using the SIM 111 and controls communication with the second network 200B using the SIM 112. The controller 130 includes at least one processor and at least one memory. The memory stores a program executed by the processor and information used for processing by the processor. The memory may include at least one of a read only memory (ROM), an erasable programmable read only memory (EPROM), an electrically erasable programmable read only memory (EEPROM), a random access memory (RAM), or a flash memory. The processor may include a digital signal processor (DSP) that performs digital processing of the digital signals and a central processing unit (CPU) that executes programs. Note that a part of the memory may be provided in the communicator 120. In addition, the DSP may be provided in the communicator 120.

In the UE100 configured in this way, the controller 130 determines whether or not the second network 200B is synchronized with the first network 200A. The communicator 120 transmits, to the base station 210A of the first network 200A, an RRC message including an information element indicating whether or not the second network 200B is synchronized with the first network 200A. As a result, the base station 210A communicating with the UE100 can grasp whether or not the second network 200B is synchronized with the first network 200A on the basis of the RRC message to be received from the UE100. Therefore, the base station 210A can appropriately configure the interruption timing for the UE100 in consideration of whether or not the second network 200B is synchronized with the first network 200A.

(Configuration Example of Base Station)

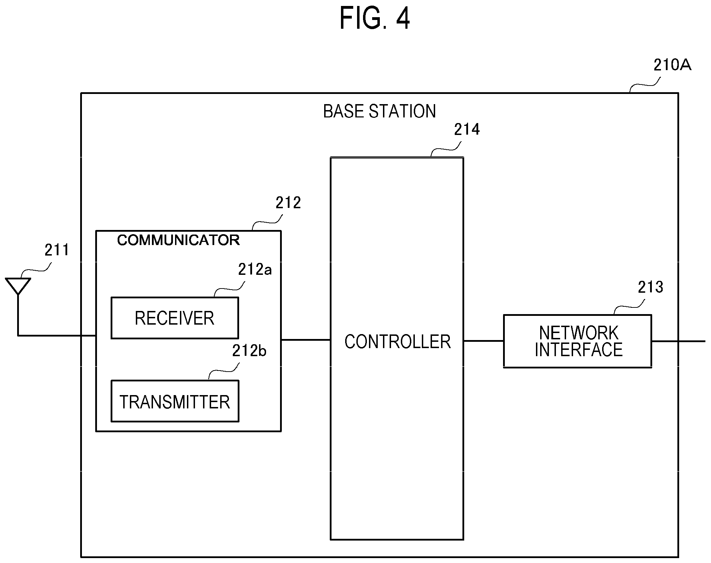

A configuration example of the base station 210A of the first network 200A will be described with reference to Fig. 4.

As illustrated in Fig. 4, the base station 210A includes an antenna 211, a communicator 212, a network interface 213, and a controller 214.

The communicator 212 communicates with the UE 100 via the antenna 211 under the control of the controller 214. The communicator 212 includes a receiver 212a and a transmitter 212b. The receiver 212a converts a radio signal received by the antenna 211 into a received signal that is a baseband signal, performs signal processing on the received signal, and outputs the signal to the controller 214. The transmitter 212b performs signal processing on a transmission signal that is a baseband signal output from the controller 214, converts the signal into a radio signal, and transmits the radio signal from the antenna 211.

The network interface 213 is connected to the core network 220A. The network interface 213 performs network communication with the mobility management apparatus 221A and the gateway apparatus 222A under the control of the controller 214.

The controller 214 controls the communicator 212 and performs various types of control in the base station 210A. The controller 214 includes at least one processor and at least one memory. The memory stores a program executed by the processor and information used for processing by the processor. The memory may include at least one of a ROM, an EPROM, an EEPROM, a RAM, and a flash memory. The processor may include a digital signal processor (DSP) that performs digital processing of the digital signals and a central processing unit (CPU) that executes programs. Note that a part of the memory may be provided in the communicator 212. In addition, the DSP may be provided in the communicator 212.

In the base station 210A configured in this way, the communicator 212 receives, from the UE100, the RRC message including the information element indicating whether or not the second network 200B is synchronized with the first network 200A. The controller 214 acquires the information element included in the RRC message. As a result, the base station 210A communicating with the UE100 can grasp whether or not the second network 200B is synchronized with the first network 200A on the basis of the RRC message to be received from the UE100. Therefore, the base station 210A can appropriately configure the interruption timing for the UE100 in consideration of whether or not the second network 200B is synchronized with the first network 200A.

(Operation of Mobile Communication System)

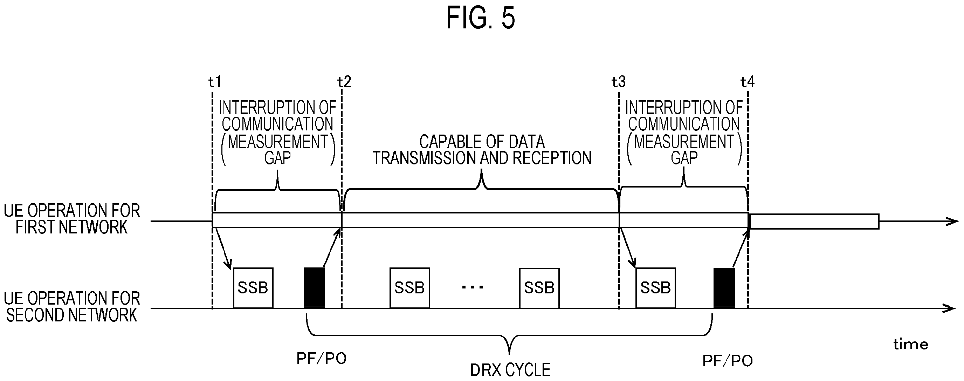

An operation of the mobile communication system 1 will be described with reference to Figs. 5 to 6.

(1) Operation Example of UE

An operation example of the UE 100 in which the interruption timing is configured from the base station 210A of the first network 200A will be described with reference to Fig. 5.

In the operation example illustrated in Fig. 5, it is assumed that the UE100 is in the RRC connected state in the cell C1 of the first network 200A, and is in the RRC idle state or the RRC inactive state in the cell C2 of the second network 200B.

As illustrated in Fig. 5, a period from time t1 to time t2 and a period from time t3 to time t4 correspond to the interruption timing at which the UE 100 interrupts communication with the base station 210A. Here, an example is illustrated in which the measurement gap is configured as an interruption timing using the radio condition of the second network 200B for measurement.

The controller 130 of the UE100 switches an object from which the communicator 120 receives a radio signal from the first network 200A to the second network 200B within each interruption timing, and performs measurement for an SSB (SS: Synchronization Signal/PBCH Block) of the second network 200B. As a result, the controller 130 of the UE100 establishes synchronization with the second network 200B and measures the reception quality.

The SSB is an example of a known signal. The SSB includes a primary synchronization signal (PSS), a secondary synchronization signal (SSS), a PBCH (Physical Broadcast Channel), and a demodulation reference signal (DMRS). For example, the SSB may be composed of four consecutive OFDM symbols in the time domain. In addition, the SSB may be composed of 240 consecutive subcarriers (that is, 20 resource blocks) in the frequency domain. The PBCH is a physical channel that carries a master information block (MIB).

The controller 130 of the UE100 measures the SSB of the second network 200B within each interruption timing, and then monitors the paging of the second network 200B. In the monitoring of the paging, whether or not there is paging addressed to the UE100 is confirmed by receiving a PDCCH (Physical Downlink Control CHannel) from the base station 210B of the second network 200B.

The UE100 intermittently monitors the paging by using a discontinuous reception (DRX: Discontinuous Reception) to reduce power consumption. Such a cycle of monitoring paging is referred to as a DRX cycle. In addition, a frame in which the UE100 should monitor paging is referred to as a paging frame (PF), and a subframe in which the UE100 should monitor paging among the PF is referred to as a paging occasion (PO: Paging Occasion).

Therefore, the interruption timing is preferably a period including the timing of the PF/PO configured in the UE100 and the SSB measurement timing immediately before the PF/PO. However, the SSB measurement at every PF/PO is not necessarily required for the UE100. For example, when the UE100 can maintain the measurement result (including the synchronization state) of the second network 200B even while communicating with the first network 200A, the UE100 may perform the SSB measurement at a cycle longer than the DRX cycle. For this reason, the interruption timing for the SSB measurement and the interruption timing for the paging monitoring may be separately configured.

Further, the interruption timing at which the communication with the base station 210A is interrupted is not limited to a case where it is configured in the UE 100 as the measurement gap. The interruption timing of interrupting the communication with the base station 210A may be configured using a DRX (C-DRX) parameter for the RRC connected state. For example, the base station 210A configures On Duration and the DRX cycle in the UE 100 so that the period from time t2 to time t3 in Fig. 5 is On Duration that is a receiving-on period, and the period from time t1 to time t2 and the period from time t3 to time t4 are a receiving-off period. The UE 100 performs SSB measurement and paging monitoring of the second network 200B in the reception off period configured from the base station 210A. Thus, the interruption timing may be configured as a measurement gap and/or a receiving-off period of DRX.

(2) Operation Example of Mobile Communication System

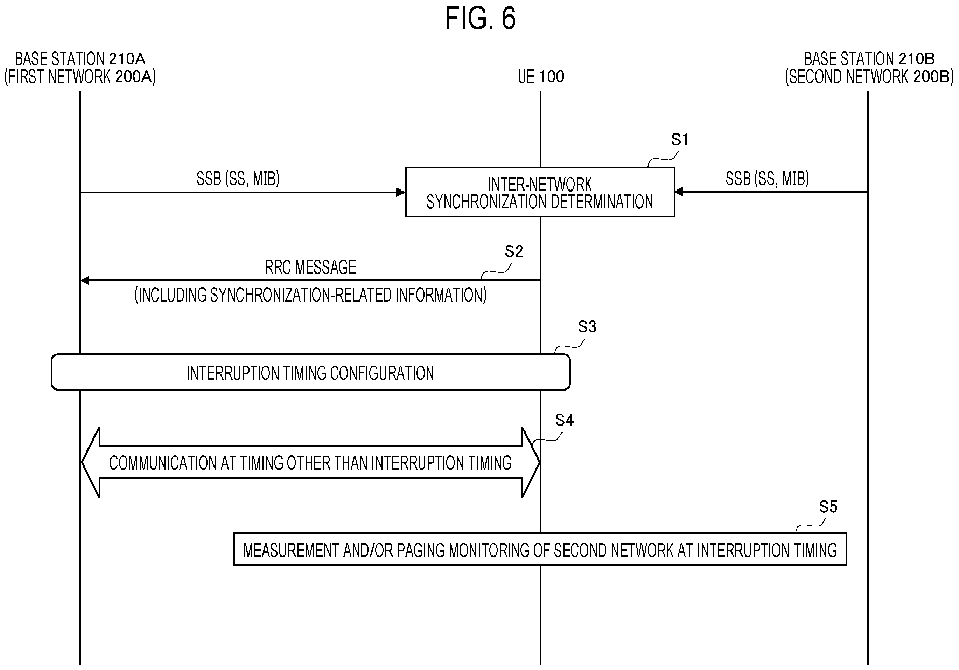

An operation example of the mobile communication system 1 according to the first embodiment will be described with reference to Fig. 6. In Fig. 6, it is assumed that the UE100 is in the RRC idle state or the RRC inactive state in the cell C2 of the second network 200B (the base station 210B).

Step S1:

The UE100 (the communicator 120) receives the SSB from the base station 210A of the first network 200A and receives the SSB from the base station 210B of the second network 200B. The UE100 (the controller 130) determines whether or not the first network 200A and the second network 200B are synchronized on the basis of these SSBs. Specifically, the UE100 (the controller 130) determines whether or not the cell C1 of the base station 210A and the cell C2 of the base station 210B are synchronized. Hereinafter, such synchronization determination is referred to as "inter-network synchronization determination", and the result of the inter-network synchronization determination is referred to as "inter-network synchronization state".

The UE100 (the controller 130) specifies the timing of the frame start of each of the cell C1 and the cell C2 on the basis of, for example, the synchronization signals (PSS/SSS) in the SSB, and compares the timing of the frame start of each of the cell C1 and the cell C2. As a result, the UE100 (the controller 130) determines whether or not the frame timings of the cell C 1 and the cell C2 are aligned. When determining that the frame timings of the cell C1 and the cell C2 are not aligned, the UE100 (the controller 130) may measure a difference in the frame timing between the cell C1 and the cell C2.

In addition, the UE100 (the controller 130) specifies the SFN of each of the cell C1 and the cell C2 on the basis of the SFN included in the MIB in the SSB, for example, and compares the SFN of each of the cell C1 and the cell C2. As a result, the UE100 (the controller 130) determines whether or not the SFNs of the cell C1 and the cell C2 are aligned.

When determining that the SFNs of the cell C1 and the cell C2 are not aligned, the UE100 (the controller 130) may measure a difference in the SFN between the cell C1 and the cell C2.

Note that in a case where the base station 210A and/or the base station 210B is an eNB, the UE100 (the communicator 120) may receive each of the synchronization signals (PSS/SSS) and the MIB from the eNB instead of the SSB. The UE100 (the controller 130) may perform the synchronization determination in step S1 on the basis of the synchronization signals (PSS/SSS) and MIB received.

Step S2:

The UE100 (the controller 130) generates an RRC message including an information element (hereinafter, referred to as "synchronization-related information") indicating whether or not the second network 200B is synchronized with the first network 200Aon the basis of the result of the inter-network synchronization determination in step S1. The UE100 (the communicator 120) transmits the RRC message including the synchronization-related information to the base station 210A of the first network 200A. The base station 210A (the communicator 212) receives the RRC message.

The synchronization-related information may include information (that is, 1-bit flag information) indicating whether or not the SFN is aligned between the first network 200A and the second network 200B. For example, when the SFN is aligned between the first network 200A and the second network 200B, the synchronization-related information may include "1 (true)". In addition, for example, when the SFN is not aligned between the first network 200A and the second network 200B, the synchronization-related information may include "0 (false)". As a result, the base station 210A can grasp whether or not the SFN is aligned between the first network 200A and the second network 200B. In addition, such information can reduce the amount of information to be transmitted.

The synchronization-related information may include information (that is, 1-bit flag information) indicating whether or not the frame timing is aligned between the first network 200A and the second network 200B. For example, when the frame timing is aligned between the first network 200A and the second network 200B, the synchronization-related information may include "1 (true)". In addition, for example, when the frame timing is not aligned between the first network 200A and the second network 200B, the synchronization-related information may include "0 (false)". As a result, the base station 210A can grasp whether or not the frame timing is aligned between the first network 200A and the second network 200B. In addition, such information can reduce the amount of information to be transmitted.

The synchronization-related information may include information (that is, 1-bit flag information) indicating whether or not both the SFN and the frame timing are aligned between the first network 200A and the second network 200B. For example, when both the SFN and the frame timing are aligned between the first network 200A and the second network 200B, the synchronization-related information may include "1 (true)". In addition, for example, when at least one of the SFN and the frame timing is not aligned between the first network 200A and the second network 200B, the synchronization-related information may include "0 (false)". As a result, the base station 210A can grasp whether or not both the SFN and the frame timing are aligned between the first network 200A and the second network 200B. In addition, such information can further reduce the amount of information to be transmitted.

The synchronization-related information may include at least one of information indicating a difference in the SFN between the first network 200A and the second network 200B (for example, an SFN offset value) and information indicating a difference in the frame timing between the first network 200A and the second network 200B (for example, a frame timing offset value). As a result, the base station 210A can grasp the detailed inter-network synchronization state.

The UE100 (the controller 130) may include such difference information in the RRC message instead of the 1-bit flag described above. When the value (difference value) of the difference information indicating the difference in the SFN is zero, the base station 210A can regard the SFN as aligned between the first network 200A and the second network 200B. Similarly, when the value (difference value) of the difference information indicating the difference in the frame timing is zero, the base station 210A can regard the frame timing as aligned between the first network 200A and the second network 200B.

Alternatively, the UE100 (the controller 130) may include such difference information in the RRC message in combination with the 1-bit flag information described above. For example, when the SFNs are not aligned and the frame timings are aligned, the UE100 (the controller 130) may include difference information indicating the difference in the SFN and 1-bit flag information indicating that the frame timings are aligned in the RRC message.

The UE100 (the controller 130) may further include at least one of a PLMN (Public Land Mobile Network) ID of the second network 200B and a cell ID of the cell C2 (that is, a camp-on-cell on which the UE100 waits) of the second network 200B in the RRC message. As a result, the base station 210A can specify a network and/or a cell on which the UE100 waits on the basis of the RRC message. In addition, the UE100 (the controller 130) may include at least one of a base station ID of the base station 210B, a frequency ID of a frequency to which the cell C2 belongs, and information requesting a configuration of the interruption timing in the RRC message.

The RRC message transmitted from the UE100 to the base station 210A in step S2 may be a message used for establishing, re-establishing, or resuming the RRC connection with the base station 210A. That is, the RRC message transmitted from the UE100 to the base station 210A may be a message that is transmitted in association with the random access procedure for the UE100 to transition from the RRC idle state or the RRC inactive state to the RRC connected state. The UE100 notifies the base station 210A of the synchronization-related information in such an RRC message. As a result, the base station 210A can grasp the inter-network synchronization state at the start of communication between the UE100 and the base station 210A. Note that the RRC message for establishing the RRC connection with the base station 210A may be an RRCSetupComplete message in 5G/NR or an RRCConnectionSetupComplete message in 4G/LTE. The RRC message for re-establishing the RRC connection with the base station 210A may be an RRCReestablishmentComplete message in 5G/NR or an RRCConnectionReestablishmentComplete message in 4G/LTE. The RRC message for resuming the RRC connection with the base station 210A may be an RRCResume-Complete message.

The RRC message transmitted from the UE100 to the base station 210A in step S2 may be an assistance information message that is transmitted by the UE100 to the base station 210A as assistance information after the UE100 establishes, re-establishes, or resumes the RRC connection with the base station 210A. That is, the RRC message transmitted from the UE100 to the base station 210A may be a message that is voluntarily transmitted after the UE100 transitions to the RRC connected state. The UE100 notifies the base station 210A of the synchronization-related information in such an RRC message. As a result, when the UE100 determines that the measurement and/or the paging monitoring of the second network 200B is necessary, it is possible to prompt the base station 210A to configure the interruption timing. Note that such an assistance information message may be a UEAssistanceInformation message and/or an RRC message (for example, MultiSIMUEInformation message) newly defined for a multi-SIM support UE.

The RRC message transmitted from the UE100 to the base station 210A in step S2 may be a response message (for example, UEInformationResponse message) that is transmitted by the UE100 in response to a transmission request from the base station 210A after the UE100 establishes, re-establishes, or resumes the RRC connection with the base station 210A of the first network 200A. The UE100 may transmit the message used for establishing, re-establishing, or resuming the RRC connection with the base station 210A as described above by including information indicating that the synchronization-related information to be transmitted to the base station 210A is present. In addition, the UE100 may notify the base station 210A of the capability of supporting a plurality of SIMs using the logical channel ID of the MAC CE in the message 3 transmitted during the random access procedure. The base station 210A transmits, to the UE100, a message (for example, UEInformationRequest message) requesting the transmission of the synchronization-related information on the basis of such information. In response to the request message, the UE100 transmits a response message including the synchronization-related information to the base station 210A. The UE100 notifies the base station 210A of the synchronization-related information in such a response message. As a result, the base station 210A can perform control to request the synchronization-related information from the UE100 only when the base station 210A can configure the interruption timing.

Note that the base station 210A (the communicator 212) may broadcast information indicating that the transmission of the synchronization-related information by the UE100 is permitted by including the information in the SIB, for example. The UE100 (the communicator 120) may be able to transmit the synchronization-related information to the base station 210A only when the base station 210A permits the transmission of the synchronization-related information.

In addition, the base station 210A (the communicator 212) may broadcast information indicating that the acquisition and the transmission of the synchronization-related information by the UE100 is permitted by including the information in the SIB, for example. The UE100 (the communicator 120) may transmit the synchronization-related information to the base station 210A in response to the base station 210A requesting the acquisition and the transmission of the synchronization-related information.

Step S3:

The base station 210A (the controller 214) determines an interruption timing to be configured in the UE100 on the basis of the information included in the RRC message received from the UE100, and configures the determined interruption timing in the UE100. For example, the base station 210A (the controller 214) transmits, to the UE100, an RRC reconfiguration message including an interruption timing configuration indicating the determined interruption timing. The UE100 (the communicator 120) receives the RRC reconfiguration message. The UE100 (the controller 130) stores and applies the interruption timing configuration included in the RRC reconfiguration message received. Such an RRC reconfiguration message may be an RRCReconfiguration message in 5G/NR or an RRCConnectionReconfiguration message in 4G/LTE.

The interruption timing configuration configured in the UE100 includes, for example, an interruption cycle that is a cycle of the interruption timing and an interruption time width that is a time width of the interruption timing as configuration parameters. When the measurement gap is used as the interruption timing, the measurement gap configuration can be used as the interruption timing configuration. The measurement gap configuration (measurement gap parameter set) may include gapOffset, mgl, mgrp, and mgta. mgl is a measurement gap length (measurement gap length) of the measurement gap. mgrp is a measurement gap repetition period (measurement gap repetition period: MGRP) of the measurement gap. mgta is measurement gap timing advance (measurement gap timing advance). gapOffset is a gap offset of a gap pattern with MGRP.

When determining that at least one of the SFN and/or the frame timing is not aligned between the first network 200A and the second network 200B on the basis of the synchronization-related information included in the RRC message received from the UE100, the base station 210A (the controller 214) generates the interruption timing configuration in consideration of the inter-network synchronization state. In this case, the base station 210A (the controller 214) may perform processing of specifying the SFN and/or the frame timing of the second network 200B (the cell C2). For example, the base station 210A (the controller 214) may acquire information specifying the SFN and/or the frame timing of the second network 200B (the cell C2) from the second network 200B (for example, the base station 210B). In addition, for example, the base station 210A (the controller 214) may acquire the information from OAM (Operations Administration Maintenance).

Step S4:

The base station 210A (controller 214) allocates radio resources to the UE 100 and communicates with the UE 100 at a timing other than the interruption timing configured in the UE 100. The UE 100 (controller 130) monitors the PDCCH of the base station 210A at a timing other than the interruption timing configured from the base station 210A and communicates with the base station 210A.

Step S5:

The base station 210A (the controller 214) does not allocate radio resources to the UE100 and interrupts the communication with the UE100 at the interruption timing configured in the UE100. The UE100 (the controller 130) interrupts the communication with the base station 210A at the interruption timing configured from the base station 210A, and performs measurement of a radio condition and monitoring of the paging of the second network 200B.

(Summary of First Embodiment)

As described above, the RRC message including the synchronization-related information, which is an information element indicating whether or not the second network 200B is synchronized with the first network 200A, is transmitted from the UE100 to the base station 210A of the first network 200A. As a result, the base station 210A communicating with the UE100 can grasp whether or not the second network 200B is synchronized with the first network 200A on the basis of the RRC message to be received from the UE100. Therefore, the base station 210A can appropriately configure the interruption timing for the UE100 in consideration of whether or not the second network 200B is synchronized with the first network 200A.

[Second Embodiment]

A second embodiment will be described mainly with respect to differences from the first embodiment described above.
In order for the UE100 to receive paging from the second network 200B, the UE100 needs to measure a radio condition in the second network 200B before monitoring paging from the second network 200B. The measurement of the radio condition includes at least one of processing of establishing synchronization by receiving a synchronization signal and processing of executing measurement based on a known signal. That is, in order for the UE100 to measure the radio condition in the second network 200B, it is necessary to receive a known signal from the base station 210 of the second network 200B.
In the second embodiment, the controller 130 of the UE100 acquires a measurement timing configuration indicating the timing at which the UE100 measures the radio condition in the second network 200B. That is, the controller 130 acquires the measurement timing configuration for measurement based on a known signal in the second network 200B.
The measurement timing configuration is, for example, an SMTC (SSB measurement timing configuration) window that is configured in the UE100 from the base station 210B of the second network 200B. The UE100 detects and measures the SSB within the configured SMTC window. The SMTC window is designated by configuration parameters of a measurement cycle, an offset, and a measurement time width of the SSB. The measurement cycle and the offset of the SSB are a cycle and an offset of a measurement window for receiving the SSB, for example, given by the number of subframes. The measurement cycle is configured to one out of 5, 10, 20, 40, 80, and 160 ms, and is not necessarily the same as the actual transmission cycle of the SSB. The measurement time width (also referred to as Duration) is a time length of the measurement window for receiving the SSB, and is given by, for example, the number of subframes. One out of 1, 2, 3, 4, and 5 ms (that is, 1, 2, 3, 4, and 5 subframes) is configured according to the number of SSBs to be transmitted.

Note that, in a case where the base station 210B of the second network 200B is an eNB, the timing at which the PSS and/or the SSS are transmitted (hereinafter, also referred to as a PSS/SSS window) can be used as the measurement timing configuration instead of the SMTC window.

In the second embodiment, the controller 130 of the UE100 generates an RRC message including the acquired measurement timing configuration and the synchronization-related information described above. The communicator 120 of the UE100 transmits the RRC message to the base station 210A of the first network 200A. After transmitting the RRC message, the communicator 120 of the UE100 receives, from the base station 210A, an RRC reconfiguration message including an interruption timing configuration indicating the timing of interrupting the communication with the base station 210A. The controller 130 of the UE100 interrupts the communication with the base station 210A and measures the radio condition according to the interruption timing configuration.

In this manner, the RRC message including the measurement timing configuration in the second network 200B is transmitted from the UE100 to the base station 210A. As a result, the base station 210A can grasp the measurement timing at which the UE100 should measure the radio condition of the second network 200B. As a result, the base station 210A can determine an appropriate interruption timing in consideration of the measurement timing of the radio condition of the second network 200B by the UE100.

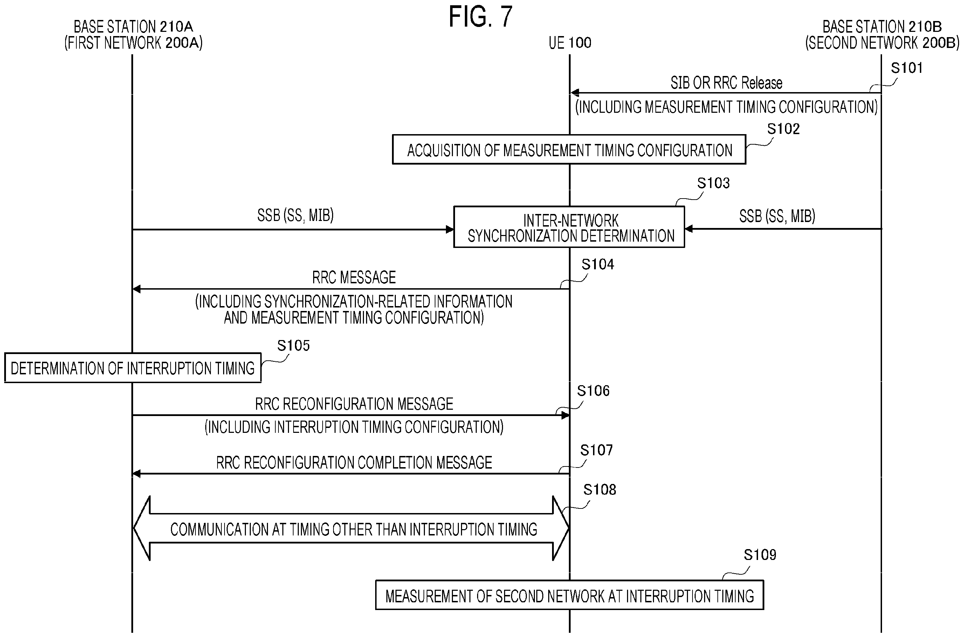

An operation example of the mobile communication system 1 according to the second embodiment will be described with reference to Fig. 7. Since the basic operation is similar to that of the first embodiment, differences from the operation example of the mobile communication system 1 according to the first embodiment (see Fig. 6) will be described.

Step S101:

The base station 210B (the communicator 212) of the second network 200B transmits a message including the measurement timing configuration in the second network 200B (step S101).

The message including the measurement timing configuration in the second network 200B may be a system information block (SIB) broadcast from the base station 210B. The UE100 can receive the SIB not only when the second network 200B is in the RRC connected state but also when the second network 200B is in the RRC idle state or the RRC inactive state. Such an SIB may be an SIB used to control cell reselection of the UE100 in the RRC idle state or the RRC inactive state, for example, an SIB type 2 or an SIB type 4 in 5G/NR. The SIB type 2 is an SIB for intra-frequency cell reselection. The SIB type 4 is an SIB for inter-frequency cell reselection. The UE100 (the communicator 120) receives such an SIB. The UE100 (the controller 130) acquires the measurement timing configuration included in the SIB (step S102).

The message including the measurement timing configuration in the second network 200B may be an RRC release (RRCRelease) message transmitted from the base station 210B to the UE100. The RRC release message is a type of the RRC message, and is a message for causing the UE100 to transition from the RRC connected state to the RRC idle state or the RRC inactive state. By notifying the UE100 of the measurement timing configuration in the RRC release message, the base station 210B can configure the measurement timing optimized for each UE in the UE100. The UE100 (the communicator 120) receives such an RRC release message. The UE100 (the controller 130) acquires the measurement timing configuration included in the RRC release message (step S102).

Note that the measurement timing configuration is not limited to the SMTC window or the PSS/SSS window described above. The measurement timing configuration may be configuration information indicating the timing at which the UE100 measures the radio condition in the second network 200B. The measurement timing configuration includes at least one of a measurement cycle, an offset, and a measurement time width as configuration parameters.

The UE100 (the controller 130) may generate and acquire the measurement timing configuration on the basis of a signal transmission configuration in the second network 200B. For example, the signal transmission configuration is at least one of the following 1) to 3) in the case of 5G/NR.

1) subCarrierSpacingCommon included in MIB broadcast from the base station 210B
2) ssb-PeriodicityServingCell included in an SIB type 1 broadcast from the base station 210B
3) ssb-PositionsInBurst included in the SIB type 1 broadcasted from the base station 210B
subCarrierSpacingCommon is information element indicating subcarrier spacing. The ssb-PeriodicityServingCell is an information element indicating a transmission cycle of the SSB. ssb-PositionsInBurst is an information element indicating the position of the SSB in the time domain.

Step S103:

The UE100 (the controller 130) performs the inter-network synchronization determination similarly to the first embodiment. Note that step S103 may be performed simultaneously with step S102, or may be performed before step S102.

Step S104:

The UE100 (the controller 130) generates an RRC message including the measurement timing configuration acquired in step S102 and the synchronization-related information acquired in step S103. Then, the UE100 (the communicator 120) transmits the RRC message including the measurement timing configuration to the base station 210A of the first network 200A.

Step S105:

The base station 210A (the controller 214) determines the interruption timing to be configured in the UE100 on the basis of the synchronization-related information and the measurement timing configuration included in the RRC message received from the UE100. For example, the base station 210A (the controller 214) determines the cycle and the time width of the interruption timing so as to cover the timing at which the UE100 performs the measurement of the second network 200B. Here, the base station 210A (the controller 214) determines the interruption timing in consideration of the inter-network synchronization state. The base station 210A (the controller 214) generates an RRC reconfiguration message including an interruption timing configuration indicating the determined interruption timing.

Step S106:

The base station 210A (the communicator 212) transmits the RRC reconfiguration message including the interruption timing configuration to the UE100. The UE100 (the communicator 120) receives the RRC reconfiguration message. The UE100 (the controller 130) stores and applies the interruption timing configuration included in the RRC reconfiguration message received.

Step S107:

The UE100 (communicator 120) transmits, to the base station 210A, an RRC reconfiguration completion message indicating that the configuration by the RRC reconfiguration message from the base station 210A is completed. The base station 210A (the communicator 212) receives the RRC reconfiguration completion message.

Step S108:

The base station 210A (the controller 214) allocates radio resources to the UE100 and communicates with the UE100 at timing other than the interruption timing configured in the UE100. The UE100 (the controller 130) monitors the PDCCH of the base station 210A at timing other than the interruption timing configured from the base station 210A and communicates with the base station 210A.

Step S109:

The base station 210A (the controller 214) does not allocate radio resources to the UE100 and interrupts the communication with the UE100 at the interruption timing configured in the UE100. The UE100 (the controller 130) interrupts the communication with the base station 210A and measures the radio condition of the second network 200B at the interruption timing configured from the base station 210A.

In this way, according to the second embodiment, the UE100 can measure the radio condition of the second network 200B using the interruption timing configuration in which the measurement timing configuration of the second network 200B is considered. Therefore, the UE100 can interrupt the communication with the base station 210A for the minimum necessary time, and a decrease in the throughput of the communication with the base station 210A can be reduced. Then, the UE100 can appropriately receive the paging of the second network 200B by measuring the radio condition of the second network 200B and then monitoring the paging of the second network 200B.

[Modification of Second Embodiment]

A modification of the second embodiment will be described mainly with respect to differences from the second embodiment described above.

In the modification of the second embodiment, the controller 130 of the UE100 further acquires a paging parameter set for specifying the timing (that is, PF/PO) at which the UE100 monitors paging in the second network 200B. The communicator 120 of the UE100 transmits an RRC message further including the paging parameter set to the base station 210A. As a result, the base station 210A can grasp the timing at which the UE100 should perform paging monitoring of the second network 200B. As a result, the base station 210A can determine an appropriate interruption timing in consideration of the paging monitoring timing of the second network 200B by the UE100.

In the modification of the second embodiment, after transmitting the RRC message, the communicator 120 of the UE100 receives the RRC reconfiguration message including the interruption timing configuration from the base station 210A. The interruption timing configuration indicates the timing at which the communication with the base station 210A is interrupted to measure a radio condition and monitor the paging. The controller 130 of the UE100 interrupts the communication with the base station 210A according to the interruption timing configuration and performs the measurement of the radio condition and the monitoring of the paging.

As a result, the UE100 can monitor the paging of the second network 200B using the interruption timing configuration in which the paging parameter set of the second network 200B is considered. Therefore, the UE100 can interrupt the communication with the base station 210A for the minimum necessary time for the measurement of the radio condition of the second network 200B and the paging monitoring, and a decrease in the throughput of the communication with the base station 210A can be suppressed.

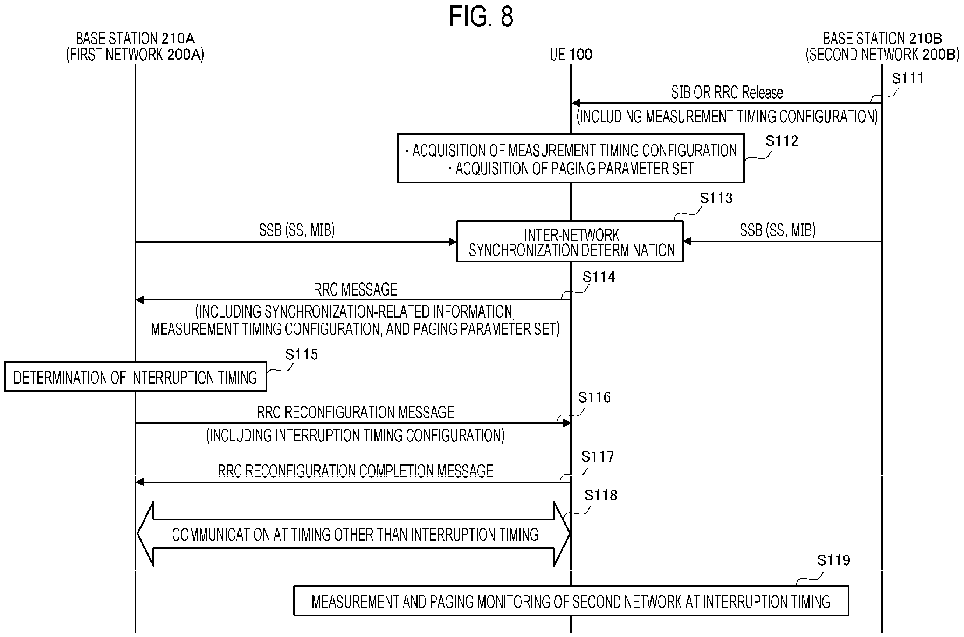

The modification of the second embodiment will be described with reference to Fig. 8.

Steps S111 to S112:
The base station 210B (the communicator 212) of the second network 200B transmits a message including the measurement timing configuration in the second network 200B (step 5111). The UE100 (the controller 130) acquires the measurement timing configuration included in the message from the base station 210B (step S112). In the modification of the second embodiment, the UE100 (the controller 130) acquires not only the measurement timing configuration but also the paging parameter set (step S112).

For example, the paging parameter set includes a parameter set for specifying PF and PO of paging in the second network 200B. First, the paging parameter set may include configuration information for paging. The configuration information may be paging control channel (PCCH)-Config. The configuration information is included in system information transmitted in the second network 200B. The UE 100 (communicator 120) receives the system information in the second network 200B. Then, the UE 100 (controller 130) acquires the configuration information included in the system information.

Secondly, the paging parameter set includes the ID of the UE 100 in the second network 200B. For example, in a case where the base station 210B of the second network 200B is a gNB, the ID is the least significant 10 bits of 5G-S-TMSI (temporary mobile subscriber identity) of the UE 100 in the second network 200B or the 5G-STMSI. When the base station 210B of the second network 200B is the eNB, the ID is the IMSI of the UE 100 in the second network 200B or the least significant 10 bits of the IMSI.

Here, a method of determining PF and PO will be described. For 5G/NR, PF is determined by the following equation:

$$(\text{SFN} + \text{PF\_offset}) \bmod T = (T \text{ div } N)*(\text{UE\_ID} \bmod N)$$

The SFN is an SFN of a PF. The PF_offset is an offset used to determine the PF. The T is a DRX (discontinuous reception) cycle of the UE100. The UE_ID is the least significant 10 bits of the 5G-S-TMSI. The N is the total number of PFs in T. For example, T is indicated by defaultPagingCycle included in PCCH-Config. For example, N and PF_offset are indicated by nAndPagingFrameOffset included in PCCH-Config.

For 5G/NR, PO is determined by the following equation:

$$i\_s = \text{floor}(\text{UE\_ID}/N) \bmod Ns$$

The i_s indicates an index of PO. The UE_ID is the least significant 10 bits of the 5G-S-TMSI. The N is the total number of PFs in T. T is a DRX cycle of the UE 100. The Ns is the number of POs for PF. For example, N is indicated by nAndPagingFrameOffset included in PCCH-Config. Ns is indicated by ns included in PCCH-Config. PO is associated with PF. For example, PO starts in or after PF.

For 4G/LTE, PF is determined by the following expression:

$$\text{SFN mod } T = (T \text{ div } N)*(UE\_ID \text{ mod} N)$$

The SFN is SFN of PF. The T is a DRX cycle of the UE 100. The N is a smaller one of T and nB. The nB is a parameter to be configured. UE_ID is the least significant 10 bits of the IMSI. For example, T is indicated by the default-PagingCycle included in PCCH-Config. nB is indicated by nB included in PCCH-Config.

For 4G/LTE, PO is determined by the following expression:

$$i\_s = \text{floor}(UE\_ID/N) \text{ mod } Ns$$

The i_s indicates an index of PO. The UE_ID is the least significant 10 bits of the IMSI. The N is a smaller one of T and nB. The T is a DRX cycle of the UE 100, and nB is a configured parameter. The Ns is the larger of 1 and nB/T. For example, T is indicated by the defaultPagingCycle included in PCCH-Config. nB is indicated by nB included in PCCH-Config.

Step S113:

The UE100 (the controller 130) performs the inter-network synchronization determination similarly to the first embodiment. Note that step S113 may be performed simultaneously with step S112, or may be performed before step S112.

Step S114:

The UE100 (the controller 130) generates an RRC message including the measurement timing configuration and the paging parameter set acquired in step S112 and the synchronization-related information acquired in step S113. Then, the UE100 (the communicator 120) transmits the RRC message to the base station 210A of the first network 200A.

Step S115:

The base station 210A (the controller 214) determines the interruption timing to be configured in the UE100 on the basis of the measurement timing configuration, the paging parameter set, and the synchronization-related information included in the RRC message received from the UE100. The base station 210A (the controller 214) determines the cycle and the time width of the interruption timing so as to cover the timing at which the UE100 performs the measurement of the second network 200B (for example, the SMTC window) and the timing at which the paging is monitored (for example, the PF/PO). The base station 210A (the controller 214) generates an RRC reconfiguration message including an interruption timing configuration indicating the determined interruption timing.

Step S116:

The base station 210A (communicator 212) transmits the RRC reconfiguration message including the interruption timing configuration to the UE 100. The UE 100 (communicator 120) receives the RRC reconfiguration message. The UE 100 (controller 130) stores and applies the interruption timing configuration included in the received RRC reconfiguration message.

Step S117:

The UE 100 (communicator 120) transmits, to the base station 210A, an RRC reconfiguration completion message indicating that the configuration is completed by the RRC reconfiguration message from the base station 210A. The base station 210A (communicator 212) receives the RRC reconfiguration completion message.

Step S118:

The base station 210A (the controller 214) allocates radio resources to the UE100 and communicates with the UE100 at timing other than the interruption timing configured in the UE100. The UE100 (the controller 130) monitors the PDCCH of the base station 210A at timing other than the interruption timing configured from the base station 210A and communicates with the base station 210A.

Step S119:

The base station 210A (controller 214) does not allocate radio resources to the UE 100 and interrupts communication with the UE 100 at the interruption timing configured in the UE 100. The UE 100 (controller 130) interrupts the communication with the base station 210A, measures the radio condition of the second network 200B, and monitors paging of the second network 200B at the interruption timing configured from the base station 210A.

[Other Embodiments]

In the operation of the above-described embodiment, the first network 200A and the base station 210A may be replaced with a cell C1 (first cell), or the first network 200A and the base station 210A may be replaced with a cell C2 (second cell).

The steps in the operations of the above-described embodiments may not necessarily be performed in chronological order according to the order described in the flow diagram or sequence diagram. For example, steps in an operation may be performed in an order different from the order described as a flow diagram or sequence diagram, or may be performed in parallel. In addition, some of the steps in the operation may be removed and additional steps may be added to the process. Furthermore, each operation flow described above is not limited to be separately and independently implemented, and can be implemented by combining two or more operation flows. For example, some steps of one operation flow may be added to another operation flow, or some steps of one operation flow may be replaced with some steps of another operation flow.

A program may be provided to cause a computer to execute the operations of the UE 100 or the base station 210. The program may be stored in a computer-readable medium. The program can be installed on a computer from a computer-readable medium having the program stored thereon. The computer-readable medium having the program stored thereon may be a non-transitory recording medium. The non-transitory recording medium may include, but is not limited to, a CD-ROM and a DVD-ROM. The UE 100 or the base station 210 may be embodied as a semiconductor integrated circuit (chipset, SoC, etc.) by integrating the circuits that execute the respective operations of the UE 100 or the base station 210.

Note that, in the above-described embodiments, "transmit" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive" may mean to perform processing of at least one layer in the protocol stack used for reception, or may mean to physically receive a signal wirelessly or by wire. Alternatively, "receive" may mean a combination of performing the processing of at least one layer and physically receiving a signal wirelessly or by wire.

Although the present disclosure has been described in accordance with examples, it is understood that the present disclosure is not limited to the examples and structures. The present disclosure also includes various modification examples and modifications within an equivalent range. In addition, various combinations and modes, and other combinations and modes including only one element, more elements, or less elements are also within the scope and idea of the present disclosure.

**Claims**

1. A user equipment (100) configured to communicate with a plurality of networks (200A, 200B) using a plurality of subscriber identity modules (111, 112), the user equipment comprising:

   a communicator (120) configured to communicate with a base station (210A) of a first network (200A) included in the plurality of networks (200A, 200B); and
   a controller (130) configured to determine whether or not a second network (200B) included in the plurality of networks (200A, 200B) is synchronized with the first network (200A), wherein
   the communicator (120) transmits, to the base station (210A), a radio resource control (RRC) message including an information element indicating whether or not the second network (200B) is synchronized with the first network (200A).

2. The user equipment according to claim 1, wherein

the information element includes at least one of
information indicating whether or not system frame numbers are aligned between the first network (200A) and the second network (200B), and
information indicating whether or not frame timings are aligned between the first network (200A) and the second network (200B).

3. The user equipment according to claim 1 or 2, wherein
the communicator (120) is configured to transmit, to the base station (210A), the RRC message further including at least one of a PLMN (Public Land Mobile Network) ID of the second network (200B) and a cell ID of a cell of the second network (200B).

4. The user equipment according to any one of claims 1 to 3, wherein

the information element includes at least one of
information indicating a difference in system frame number between the first network (200A) and the second network (200B), and
information indicating a difference in frame timing between the first network (200A) and the second network (200B).

5. The user equipment according to any one of claims 1 to 4, wherein the RRC message is a message that is used when the user equipment (100) establishes, re-establishes, or resumes an RRC connection with the base station (210A).

6. The user equipment according to any one of claims 1 to 4, wherein the RRC message is an assistance information message that is transmitted by the user equipment (100) to the base station (210A) as assistance information after the user equipment (100) establishes, re-establishes, or resumes an RRC connection with the base station (210A).

7. The user equipment according to any one of claims 1 to 4, wherein the RRC message is a response message that is transmitted by the user equipment (100) in response to a transmission request from the base station (210A) after the user equipment (100) establishes, re-establishes, or resumes an RRC connection with the base station (210A).

8. The user equipment according to any one of claims 1 to 7, wherein

the controller (130) is configured to acquire a measurement timing configuration indicating timing at which the user equipment (100) measures a radio condition in the second network (200B), and
the communicator (120) is configured to transmit the RRC message further including the measurement timing configuration to the base station (210A).

9. The user equipment according to any one of claims 1 to 8, wherein

the controller (130) is configured to acquire a paging parameter set for specifying timing at which the user equipment (100) monitors paging in the second network (200B), and
the communicator (120) is configured to transmit the RRC message further including the paging parameter set to the base station (210A).

10. A base station (210A) of a first network (200A) included in a plurality of networks (200A, 200B) in a mobile communication system (1) in which a user equipment (100) communicates with the plurality of networks (200A, 200B) using a plurality of subscriber identity modules (111, 112), the base station comprising:

a communicator (212) configured to receive, from the user equipment (100), a radio resource control (RRC) message including an information element indicating whether or not a second network (200B) included in the plurality of networks (200A, 200B) is synchronized with the first network (200A); and
a controller (214) configured to acquire the information element included in the RRC message.

11. A communication control method performed by a user equipment (100) configured to communicate with a plurality of networks (200A, 200B) using a plurality of subscriber identity modules (111, 112), the communication control method comprising the steps of:

communicating with a base station (210A) of a first network (200A) included in the plurality of networks (200A, 200B);

determining whether or not a second network (200B) included in the plurality of networks (200A, 200B) is synchronized with the first network (200A); and

transmitting, to the base station (210A), a radio resource control (RRC) message including an information element indicating whether or not the second network (200B) is synchronized with the first network (200A).

# FIG. 1

FIRST NETWORK 200A
220A
221A  MOBILITY MANAGEMENT APPARATUS
222A  GATEWAY APPARATUS
210A  BASE STATION

SECOND NETWORK 200B
220B
221B  MOBILITY MANAGEMENT APPARATUS
222B  GATEWAY APPARATUS
210B  BASE STATION

C1
C2
UE 100

EP 4 319 334 A1

# FIG. 2

# FIG. 3

# FIG. 4

EP 4 319 334 A1

# FIG. 5

# FIG. 6

BASE STATION 210A
(FIRST NETWORK 200A)

UE 100

BASE STATION 210B
(SECOND NETWORK 200B)

SSB (SS, MIB) →

S1
INTER-NETWORK
SYNCHRONIZATION DETERMINATION

← SSB (SS, MIB)

S2
← RRC MESSAGE
(INCLUDING SYNCHRONIZATION-RELATED INFORMATION)

S3
INTERRUPTION TIMING CONFIGURATION

S4
COMMUNICATION AT TIMING OTHER THAN INTERRUPTION TIMING

S5
MEASUREMENT AND/OR PAGING MONITORING OF SECOND NETWORK AT INTERRUPTION TIMING

EP 4 319 334 A1

# FIG. 7

BASE STATION 210A
(FIRST NETWORK 200A)

UE 100

BASE STATION 210B
(SECOND NETWORK 200B)

S101

SIB OR RRC Release
(INCLUDING MEASUREMENT TIMING CONFIGURATION)

S102
ACQUISITION OF MEASUREMENT TIMING CONFIGURATION

S103

SSB (SS, MIB)

INTER-NETWORK
SYNCHRONIZATION DETERMINATION

SSB (SS, MIB)

S104
RRC MESSAGE
(INCLUDING SYNCHRONIZATION-RELATED INFORMATION
AND MEASUREMENT TIMING CONFIGURATION)

S105
DETERMINATION OF INTERRUPTION TIMING

S106
RRC RECONFIGURATION MESSAGE
(INCLUDING INTERRUPTION TIMING CONFIGURATION)

S107
RRC RECONFIGURATION COMPLETION MESSAGE

S108
COMMUNICATION AT TIMING OTHER THAN INTERRUPTION TIMING

S109
MEASUREMENT OF SECOND NETWORK AT INTERRUPTION TIMING

# FIG. 8

BASE STATION 210A
(FIRST NETWORK 200A)

UE 100

BASE STATION 210B
(SECOND NETWORK 200B)

S111

SIB OR RRC Release
(INCLUDING MEASUREMENT TIMING CONFIGURATION)

S112

· ACQUISITION OF MEASUREMENT TIMING CONFIGURATION
· ACQUISITION OF PAGING PARAMETER SET

S113

SSB (SS, MIB)

INTER-NETWORK
SYNCHRONIZATION DETERMINATION

SSB (SS, MIB)

S114

RRC MESSAGE
(INCLUDING SYNCHRONIZATION-RELATED INFORMATION,
MEASUREMENT TIMING CONFIGURATION, AND PAGING PARAMETER SET)

S115

DETERMINATION OF INTERRUPTION TIMING

S116

RRC RECONFIGURATION MESSAGE
(INCLUDING INTERRUPTION TIMING CONFIGURATION)

S117

RRC RECONFIGURATION COMPLETION MESSAGE

S118

COMMUNICATION AT TIMING OTHER THAN INTERRUPTION TIMING

S119

MEASUREMENT AND PAGING MONITORING OF SECOND NETWORK AT INTERRUPTION TIMING

EP 4 319 334 A1

## INTERNATIONAL SEARCH REPORT

International application No.

**PCT/JP2022/011978**

| A. | CLASSIFICATION OF SUBJECT MATTER |
|---|---|

*H04W 56/00*(2009.01)i; *H04W 68/12*(2009.01)i
FI:   H04W56/00 110; H04W68/12

According to International Patent Classification (IPC) or to both national classification and IPC

| B. | FIELDS SEARCHED |
|---|---|

Minimum documentation searched (classification system followed by classification symbols)
H04B7/24-7/26, H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/044932 A1 (MITSUBISHI ELECTRIC CORP.) 11 March 2021 (2021-03-11) paragraphs [0119]-[0181], [0293]-[0325], fig. 14-16 | 1-11 |
| A | ZTE CORPORATION, SANECHIPS. "Consideration on the Switching Notification Procedure". 3GPP TSG-RAN WG2 Meeting #113-e R2-2100429, [online], 15 January 2021, Internet <URL: https://www.3gpp. org/ftp/tsg_ran/WG2_RL2/TSGR2_113-e/Docs/ R2-2100429.zip>, [retrieved on 22 April 2022] entire text, all drawings | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2022/011978** |

| Patent document<br>cited in search report | Publication date<br>(day/month/year) | Patent family member(s) | Publication date<br>(day/month/year) |
|---|---|---|---|
| WO 2021/044932 A1 | 11 March 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021058624 A

**Non-patent literature cited in the description**

- Scenarios and Impact analysis for Switching Notification. *R2-2009265*
- Switching between two links for Multi-SIM. *R2-2009557*
- Discussion on switching mechanism for multi-SIM. *R2-2010350*
- Discussion on Switching Notification Procedure. *R2-2100475*